# EUROPEAN PATENT APPLICATION

(11) **EP 4 524 303 A1**
(43) Date of publication of application: **19.03.2025**
(21) Application number: 24167242.7
(22) Date of filing: 28.03.2024
(51) Int. Cl.: D01F 6/84

(54) **TEMPERATURE-SENSITIVE AND HUMIDITY-REGULATING FIBER AND MANUFACTURING METHOD THEREOF**

(30) Priority: 12.09.2023 TW 112134741
(71) Applicant: TAIWAN TEXTILE RESEARCH INSTITUTE, New Taipei City (TW)
(72) Inventor: SUNG, Yi-Ching, New Taipei City (TW); CHEN, Wen-Jung, New Taipei City (TW); CHEN, Yu-Ming, New Taipei City (TW)
(74) Representative: Winter, Brandl - Partnerschaft mbB

(57) **Abstract**

A temperature-sensitive and humidity-regulating fiber includes a polymer. The polymer includes a polyester main chain and at least one side chain, and the side chain is connected to the polyester main chain. The side chain is a structure shown in Formula (1): 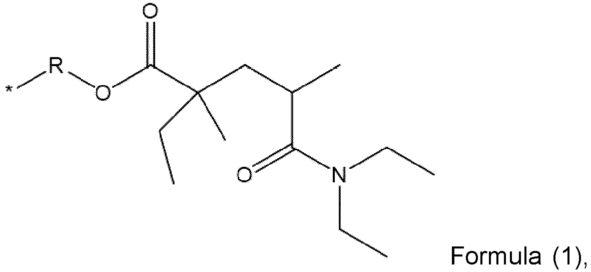 in which R is an alkylene group.

## Description

### BACKGROUND

### Field of Disclosure

The present disclosure relates to a fiber and a manufacturing method thereof, particularly relates to a temperature-sensitive and humidity-regulating fiber and a manufacturing method thereof.

### Description of Related Art

In recent years, as people's demand for the quality of life has gradually increased, wearing comfort of clothing has become an important factor in the purchase of clothing. Functional clothing, of which the function can be adjusted in response to temperature changes in environment or body between autumn and winter, air-conditioned environment, and during exercise and sweating, has currently become an emerging product in the textile market.

Textiles applied in sportswear need to provide users with functions of quick-drying, cooling, and reducing heat loss when the external environmental condition changes, so as to maintain the thermal comfort. However, traditional moisture-absorbing and perspiration clothing is mainly manufactured by passive fabric structure design and finishing processing technology (e.g., single-sided or double-sided coating), resulting in the disadvantages of losing temperature and humidity-controlling functions due to sultriness under saturated humidity during exercise.

### SUMMARY

The present disclosure provides a temperature-sensitive and humidity-regulating fiber. The temperature-sensitive and humidity-regulating fiber can be quickly dried at high temperature to achieve a cooling function, and can slow down the drying rate of moisture at low temperature to achieve a function of reducing heat loss. The present disclosure also provides a manufacturing method of the temperature-sensitive and humidity-regulating fiber, which can greatly improve the manufacturing convenience.

According to some embodiments of the present disclosure, a temperature-sensitive and humidity-regulating fiber includes a polymer. The polymer includes a polyester main chain and at least one side chain, and the side chain is connected to the polyester main chain. The side chain is a structure shown in Formula (1): 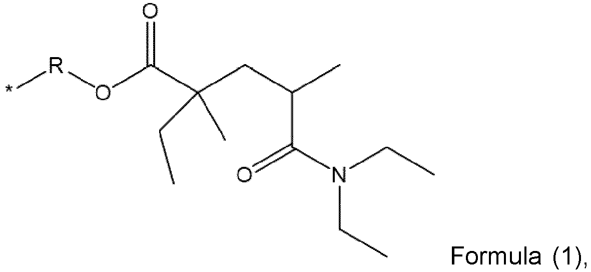 in which R is an alkylene group.

In some embodiments of the present disclosure, in Formula (1), R is a functional group selected from the group consisting of ethylene group, propylene group, butylene group, pentylene group, hexylene group, and heptylene group.

In some embodiments of the present disclosure, the polyester main chain has a carbon chain segment, and the side chain is connected to the carbon chain segment of the polyester main chain.

According to some other embodiments of the present disclosure, a manufacturing method of a temperature-sensitive and humidity-regulating fiber includes: conducting a first polymerization reaction between N,N-diethylacrylamide and hydroxyalkyl methacrylate to form a first compound; conducting a second polymerization reaction between a dicarboxylic acid and a diol to form a second compound; conducting a transesterification reaction between the first compound and the second compound to form a polymer; and fiberizing the polymer to form the temperature-sensitive and humidity-regulating fiber.

In some embodiments of the present disclosure, a content of the N,N-diethylacrylamide ranges from 90 parts by mole to 110 parts by mole, and a content of the hydroxyalkyl methacrylate ranges from 2 parts by mole to 10 parts by mole.

In some embodiments of the present disclosure, the first polymerization reaction between the N,N-diethylacrylamide and the hydroxyalkyl methacrylate is conducted in a solvent, and the solvent is the diol.

In some embodiments of the present disclosure, the second polymerization reaction is conducted with the solvent, the dicarboxylic acid, and the diol.

In some embodiments of the present disclosure, the transesterification reaction between the first compound and the second compound is conducted in a solvent, and the solvent is the diol.

In some embodiments of the present disclosure, the transesterification reaction between the first compound and the second compound is conducted in a solvent, and the solvent is the diol.

In some embodiments of the present disclosure, the diol includes ethylene glycol, polyethylene glycol, or a combination thereof, and a weight average molecular weight of the diol ranges from 62 g/mol to 200 g/mol.

In some embodiments of the present disclosure, the first compound has a lower critical solution temperature of 25°C to 32°C when a light transmittance ranges from 3% to 80%.

According to the aforementioned embodiments of the present disclosure, the temperature-sensitive and humidity-regulating fiber includes the polymer, and through the configuration of the side chain in the polymer, the temperature-sensitive and humidity-regulating fiber can be quickly dried at high temperature to achieve a cooling function, and can slow down the drying rate of moisture at low temperature to achieve a function of reducing heat loss and maintain body temperature. On the other hand, in the manufacturing process of the temperature-sensitive and humidity-regulating fiber, since there is no need for purification and cleaning between each step, the product of each step can be fully used in the reaction of subsequent steps, thereby greatly improving the convenience of the manufacturing process and increasing the yield.

### BRIEF DESCRIPTION OF THE DRAWINGS

Fig. 1 is a flowchart illustrating a manufacturing method of a temperature-sensitive and humidity-regulating fiber according to some embodiments of the present disclosure;
Fig. 2 is a diagram illustrating a relationship between the temperature and the light transmittance of the temperature-sensitive and humidity-regulating unit precursors in Table 1;
Fig. 3 includes images showing the temperature-sensitive and humidity-regulating fibers of Embodiments 1-3 and the conventional polyester (polyethylene terephthalate, PET) fiber and their contact with water droplets;
Fig. 4A is a thermogravimetric analysis diagram of the temperature-sensitive and humidity-regulating polymer A4; and
Fig. 4B is a thermogravimetric analysis diagram of the temperature-sensitive and humidity-regulating fiber of Embodiment 3.

### DETAILED DESCRIPTION

In the present disclosure, the structure of a polymer or a functional group is sometimes represented by a skeleton formula. This representation can omit carbon atoms, hydrogen atoms, and carbon-hydrogen bonds. Certainly, if the atom or atom group is clearly drawn in the structural formula, the drawing shall prevail.

The present disclosure provides a temperature-sensitive and humidity-regulating fiber and a manufacturing method thereof. Through the configuration of temperature-sensitive and humidity-regulating unit of the temperature-sensitive and humidity-regulating fiber, the temperature-sensitive and humidity-regulating fiber can be quickly dried at high temperature to achieve a cooling function, and can slow down the drying rate of moisture at low temperature to achieve a function of reducing heat loss and maintain body temperature. On the other hand, the present disclosure involves grafting the temperature-sensitive and humidity-regulating unit precursor onto polyester to form the temperature-sensitive and humidity-regulating fiber. Since the solvent used to form the temperature-sensitive and humidity-regulating unit precursor can directly serve as a monomer for synthesizing polyester, there is no need for additional purification after synthesizing the temperature-sensitive and humidity-regulating unit precursor, allowing the temperature-sensitive and humidity-regulating unit precursor to fully participate in the grafting step. This significantly enhances the manufacturing convenience and increases productivity.

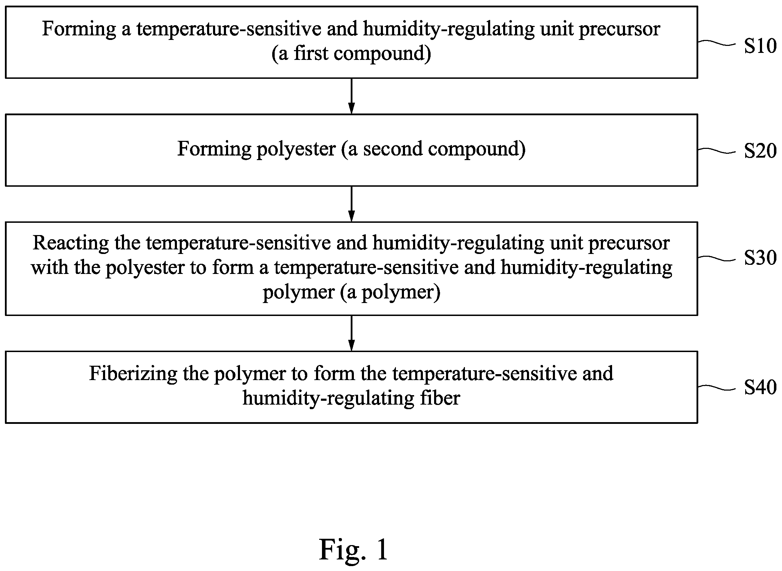

It should be noted that, for clarity and ease of explanation, the manufacturing method of the temperature-sensitive and humidity-regulating fiber will be described firstly to specifically demonstrate the means by which the effects of the present disclosure are achieved. Reference is made to Fig. 1, in which Fig. 1 is a flowchart illustrating a manufacturing method of a temperature-sensitive and humidity-regulating fiber according to some embodiments of the present disclosure. The manufacturing method of a temperature-sensitive and humidity-regulating fiber includes steps S10 to steps S40. In step S10, a temperature-sensitive and humidity-regulating unit precursor (a first compound) is formed. In step S20, polyester (a second compound) is formed. In step S30, the temperature-sensitive and humidity-regulating unit precursor reacts with the polyester to form a temperature-sensitive and humidity-regulating polymer (a polymer). In step S40, the temperature-sensitive and humidity-regulating polymer is spun into fiber (fiberized) to form the temperature-sensitive and humidity-regulating fiber. In the following description, each step will be further explained in sequence.

### [Step S10: Preparation of the Temperature-sensitive and Humidity-regulating Unit Precursor]

In the present disclosure, a first polymerization reaction is conducted between N,N-diethylacrylamide and hydroxyalkyl methacrylate to form the temperature-sensitive and humidity-regulating unit precursor. In detail, N,N-diethylacrylamide exhibits different degrees of hydrophilicity and hydrophobicity at different temperatures, meaning its affinity for water changes with temperature variations (e.g., changes with environmental temperature variations), thus providing the temperature-sensitive and humidity-regulating function. On the other hand, the reaction between N,N-diethylacrylamide and hydroxyalkyl methacrylate facilitates grafting of N,N-diethylacrylamide onto polyester (as will be explained later). In detail, hydroxyalkyl methacrylate can be grafted onto polyester through its hydroxyl groups, allowing N,N-diethylacrylamide, which is previously linked to hydroxyalkyl methacrylate, to be grafted onto polyester, thereby forming fibers with temperature-sensitive and humidity-regulating properties. In some embodiments, hydroxyalkyl methacrylate can be hydroxyethyl methacrylate, hydroxypropyl methacrylate, hydroxybutyl methacrylate, hydroxyhexyl methacrylate, or hydroxyheptyl methacrylate, thereby providing good reactivity. In some preferred embodiments, hydroxyalkyl methacrylate can be hydroxyethyl methacrylate or hydroxypropyl methacrylate, thereby reducing interference to the synthesis of the polymer during the subsequent transesterification reaction (as will be explained later). More specifically, since hydroxyethyl methacrylate or hydroxypropyl methacrylate has a shorter carbon chain, it avoids forming large steric hindrances that would interfere with the transesterification reaction.

In some embodiments, in the temperature-sensitive and humidity-regulating unit precursor, a ratio of the number of chain segments formed by hydroxyalkyl methacrylate and the number of chain segments formed by N,N-diethylacrylamide is not 1:1. Instead, there are more chain segments formed by hydroxyalkyl methacrylate and fewer chain segments formed by N,N-diethylacrylamide. In other words, in the first polymerization reaction, hydroxyalkyl methacrylate can react not only with N,N-diethylacrylamide but also with hydroxyalkyl methacrylate itself. Overall, a temperature-sensitive and humidity-regulating unit precursor is formed by random connection of hydroxyalkyl methacrylate and N,N-diethylacrylamide, with more chain segments formed by hydroxyalkyl methacrylate and fewer chain segments formed by N,N-diethylacrylamide. With this design, the temperature-sensitive and humidity-regulating unit precursor can have sufficient hydroxyl groups for polyester bonding, and can achieve good temperature-sensitive and humidity-regulating effects without requiring a large amount of N,N-diethylacrylamide. In some embodiments, this design can be achieved by adjusting the content of N,N-diethylacrylamide and hydroxyalkyl methacrylate. Specifically, a content of N,N-diethylacrylamide can ranges from 90 parts by mole to 110 parts by mole, and a content of hydroxyalkyl methacrylate can ranges from 2 parts by mole to 10 parts by mole. It should be clearly understood that the term "parts by mole" refers to a relative molar ratio between at least two components. More specifically, in the present disclosure, the molar ratio of N,N-diethylacrylamide and hydroxyalkyl methacrylate is "90 to 110" : "2 to 10."

In some embodiments, the first polymerization reaction between hydroxyalkyl methacrylate and N,N-diethylacrylamide may be conducted in a suitable solvent. Specifically, the solvent can be a diol including ethylene glycol, polyethylene glycol, or combinations thereof. It is noteworthy that in some embodiments, since the solvent (ethylene glycol or polyethylene glycol) can directly serve as a monomer for synthesizing polyester in the subsequent second polymerization reaction, after synthesizing the temperature-sensitive and humidity-regulating unit precursor, there is no need for additional purification to remove the solvent. Instead, the reactants (initiators) for the second polymerization reaction can be directly added to the reaction vessel of the first polymerization reaction. Consequently, the temperature-sensitive and humidity-regulating unit precursor can fully participate in the subsequent transesterification reaction, thereby significantly enhancing the manufacturing convenience and productivity. In some embodiments, a weight average molecular weight of the diol measured by Gel Permeation Chromatography (GPC) can range from 62 g/mol to 200 g/mol, providing sufficient fluidity during the first polymerization reaction as a solvent and good reactivity during the subsequent second polymerization reaction for polymerization, thus effectively playing a dual role.

In some embodiments, hydroxyalkyl methacrylate and N,N-diethylacrylamide may undergo a polymerization reaction in the presence of a suitable and adequate amount (e.g., 0.4 parts by mole to 0.6 parts by mole) of a free radical initiator. Specifically, a suitable free radical initiator can be benzoyl peroxide or ammonium persulfate. In some embodiments, the solvent, hydroxyalkyl methacrylate, and N,N-diethylacrylamide may be added to the reaction vessel, and nitrogen gas may be introduced into the reaction vessel while heating. When the temperature of the reaction vessel reaches about 60°C, the initiator is dripped in. Subsequently, when the temperature of the reaction vessel reaches about 80°C, additional solvent (ethylene glycol or polyethylene glycol) is added to lower the temperature and decrease the concentration. Then, when the temperature again drops to about 60°C, the initiator is dripped in once more. Such a procedure is repeated until the total reaction time is about 6 hours. After completing step S10, a mixture containing at least the temperature-sensitive and humidity-regulating unit precursor can be obtained. A partial segment chain structure of a single temperature-sensitive and humidity-regulating unit precursor molecule in some embodiments is specifically presented as Formula (A): 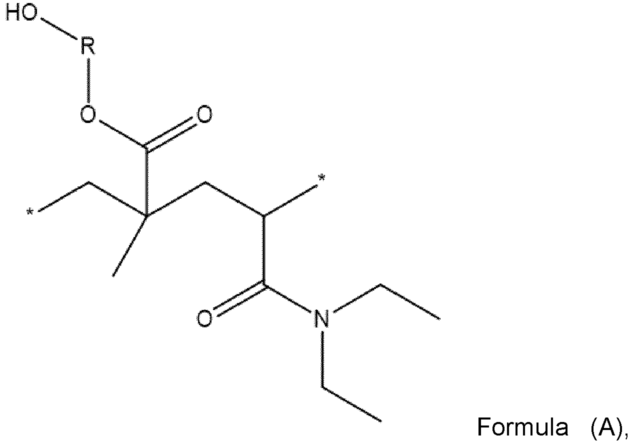 in which R is an ethylene group, propylene group, butylene group, pentylene group, hexylene group, or heptylene group.

The temperature-sensitive and humidity-regulating unit precursor of the present disclosure has different light transmittance at different temperatures. In detail, when the temperature-sensitive and humidity-regulating unit precursor is at a relatively low temperature, the temperature-sensitive and humidity-regulating unit precursor has high light transmittance; and when the temperature-sensitive and humidity-regulating unit precursor is at a relatively high temperature, the temperature-sensitive and humidity-regulating unit precursor has low light transmittance. The above-mentioned characteristic can be specifically presented through the lower critical solution temperature (LCST). In detail, as the temperature rises, the temperature-sensitive and humidity-regulating unit precursor gather with each other to cause the light transmittance to decrease, and when the light transmittance drops to 3%, the degree of aggregation of the temperature-sensitive and humidity-regulating unit precursor hardly changes with the increase in temperature, and the temperature at this point is the maximum value of the lower critical solution temperature of the temperature-sensitive and humidity-regulating unit precursor; relatively, as the temperature drops, the temperature-sensitive and humidity-regulating unit precursor is dispersed to cause the light transmittance to increase, and when the light transmittance rises to equal to 80%, the degree of dispersion of the temperature-sensitive and humidity-regulating unit precursor hardly changes with the decrease in temperature, and the temperature at this point is the minimum value of the lower critical solution temperature of the temperature-sensitive and humidity-regulating unit precursor. The range of the lower critical solution temperature of the temperature-sensitive and humidity-regulating unit precursor represents the temperature range in which the hydrophilicity and hydrophobicity of the temperature-sensitive and humidity-regulating unit precursor changes. In detail, when the temperature is lower than the lower critical solution temperature range, the temperature-sensitive and humidity-regulating unit precursor has strong hydrophilicity, and when the temperature is higher than the lower critical solution temperature range, the temperature-sensitive and humidity-regulating unit precursor has weak hydrophilicity (strong hydrophobicity). Based on the above, since the temperature-sensitive and humidity-regulating unit precursor of the present disclosure has different degrees of hydrophilicity at different temperatures, the temperature-sensitive and humidity-regulating fiber formed by the temperature-sensitive and humidity-regulating unit precursor can be quickly dried at high temperatures in order to achieve the function of cooling, and can be dried in a slow manner at low temperatures in order to achieve the function of reducing heat loss.

It should be particularly noted that the method for measuring the lower critical solution temperature includes the following steps. First, 10 milliliters of an aqueous solution of the temperature-sensitive and humidity-regulating unit precursor with a concentration of 1 wt.% is placed into a sample bottle at room temperature. Next, the sample bottle is placed into an ultraviolet/visible light spectrophotometer (model: JASCO V630). Then, the initial temperature is set at 25°C through the ultraviolet/visible light spectrophotometer, and the measurement is started. Next, the temperature is gradually increased to 36.5°C with a heating rate of 1°C/min, and the light transmittance of the temperature-sensitive and humidity-regulating unit precursor under each temperature is recorded. After the above steps, the lower critical solution temperature of the temperature-sensitive and humidity-regulating unit precursor can be obtained.

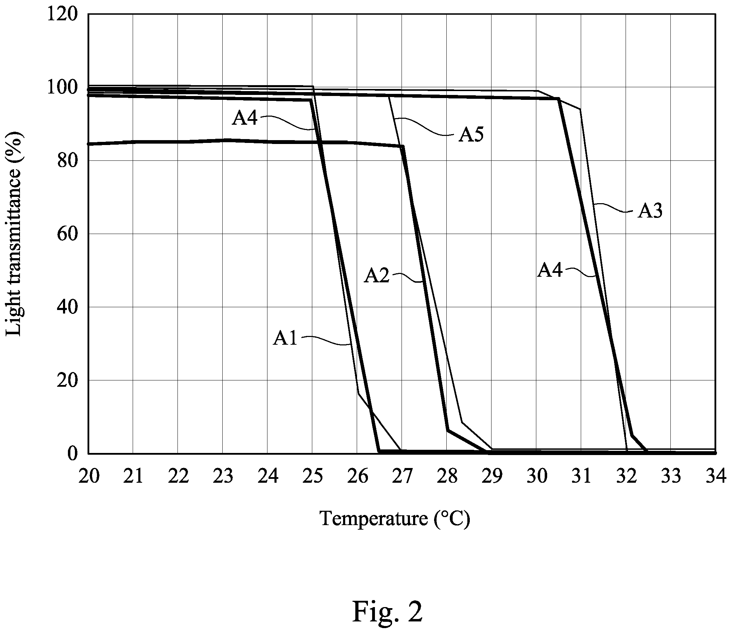

In some embodiments, the temperature-sensitive and humidity-regulating unit precursor of the present disclosure has a lower critical solution temperature of 25°C to 32°C when a light transmittance ranges from 3% to 80%, in which the wavelength of light is between 450 nm and 550 nm. Specifically, reference is made to Table 1 and Fig. 2, in which Table 1 records the preparation details (e.g., solvents and raw materials) of the temperature-sensitive and humidity-regulating unit precursors of different embodiments of the present disclosure and their corresponding lower critical solution temperatures, and Fig. 2 is a diagram illustrating a relationship between the temperature and the light transmittance of the temperature-sensitive and humidity-regulating unit precursors in Table 1. Each temperature-sensitive and humidity-regulating unit precursor in Table 1 is prepared according to the method described in paragraph [0028] of the present disclosure, in which the free radical initiator is benzoyl peroxide, and the content of benzoyl peroxide is 0.5 parts by mole.

**Table 1**

| | solvent | H:D (molar ratio) | lower critical solution temperature (°C) |
|---|---|---|---|
| tem perature-sensitive and humidity-regulating unit precursor A1 | polyethylene glycol (weight average molecular weight 200) | 10:100 | 25.0-26.0 |
| tem perature-sensitive and humidity-regulating unit precursor A2 | | 5:100 | 27.0-28.0 |
| tem perature-sensitive and humidity-regulating unit precursor A3 | | 2:100 | 31.0-32.0 |
| tem perature-sensitive and humidity-regulating unit precursor A4 | ethylene glycol (weight average molecular weight 62) | 10:100 | 25.0-26.5 |
| tem perature-sensitive and humidity-regulating unit precursor A5 | | 5:100 | 27.8-29.0 |
| tem perature-sensitive and humidity-regulating unit precursor A6 | | 2:100 | 30.5-32.0 |

| | | | |
|---|---|---|---|
| Note 1: "H" represents hydroxyethyl methacrylate. Note 2: "D" represents N,N-diethylacrylamide. | | | |

As evident from Fig. 2 and Table 1, the present disclosure enables the preparation of various temperature-sensitive and humidity-regulating unit precursors with different ranges of lower critical solution temperatures. Since these temperature-sensitive and humidity-regulating unit precursors have different ranges of lower critical solution temperatures, and overall (considering precursors A1-A6 simultaneously), the distribution range of these lower critical solution temperatures is wide (25°C to 32°C), the present disclosure can correspondingly prepare temperature-sensitive and humidity-regulating unit precursors with suitable lower critical solution temperatures according to the needs of users or environmental conditions, thereby producing temperature-sensitive and humidity-regulating fibers with a variety of applications. In other words, the temperature-sensitive and humidity-regulating fibers disclosed herein can have broad applicability. For example, when it is desired to produce a temperature-sensitive and humidity-regulating fiber that undergo changes in hydrophilicity/hydrophobicity at relatively low temperatures (ranging from 25°C to 26°C), one can choose to prepare precursor A1 as listed in Table 1; and when it is desired to produce a temperature-sensitive and humidity-regulating fiber that undergo changes in hydrophilicity/hydrophobicity at relatively high temperatures (ranging from 30.5°C to 32°C), one can choose to prepare precursor A6 as listed in Table 1.

It is noteworthy that the applicant unexpectedly discovered that, based on the trend of increase/decrease in the lower critical solution temperature as shown in Table 1, when the proportion of hydroxyalkyl methacrylate increases, there is a tendency for the lower critical solution temperature of the temperature-sensitive and humidity-regulating unit precursor to decrease. This is because hydroxyalkyl methacrylate contains hydroxyl groups, so when the proportion of hydroxyalkyl methacrylate increases, the content of hydroxyl groups in the temperature-sensitive and humidity-regulating unit precursor correspondingly increases, thereby increasing the solubility of the temperature-sensitive and humidity-regulating unit precursor in water, leading to a decrease in the lower critical solution temperature of the temperature-sensitive and humidity-regulating unit precursor in the aqueous phase.

### [Step S20: Formation of Polyester]

In the present disclosure, a second polymerization reaction is conducted between a dicarboxylic acid and a diol to form polyester. In some embodiments, the dicarboxylic acid can be terephthalic acid, and the diol can be ethylene glycol, polyethylene glycol, or a combination thereof. In other words, the polyester can be polyethylene terephthalate. In some embodiments, though a measurement conducted by a gel permeation chromatograph (GPC, model: Hitachi L-6200), a weight average molecular weight of the diol can range from 62 g/mol to 200 g/mol, ensuring that the diol and dicarboxylic acid do not have significantly different weight average molecular weights, thereby providing good reactivity to form polyester with higher purity.

In some embodiments, the dicarboxylic acid and the diol are placed into a mixture containing the temperature-sensitive and humidity-regulating unit precursor obtained from step S10 to conduct the second polymerization reaction. In this embodiment, the solvent (ethylene glycol or polyethylene glycol) in the mixture can participate in the second polymerization reaction. In other words, the dicarboxylic acid, the diol, and the solvent in the mixture can participate in the second polymerization reaction (i.e., the second polymerization reaction can be conducted with the solvent, the dicarboxylic acid, and the diol). Essentially, the solvent from the first polymerization reaction can serve as a reactant in the second polymerization reaction. Consequently, after the first polymerization reaction, there is no need for additional purification to remove the solvent, significantly enhancing manufacturing convenience and productivity. In some embodiments, the dicarboxylic acid and the diol can react in an oxygen-free environment (e.g., a nitrogen environment) at a temperature of 260°C to 280°C and a pressure of 1 atm to 3 atm for 1 hour to 3 hours. In some embodiments, the molar ratio of the dicarboxylic acid and an additionally added diol (i.e., non-solvent diol) can range from 98:2 to 95:5, with 95:5 being preferable for better reaction efficiency. In some other embodiments, additional diol may not be required. Additionally, when the content of N,N-diethylacrylamide ranges from 90 parts by mole to 110 parts by mole, and a content of hydroxyalkyl methacrylate ranges from 2 parts by mole to 10 parts by mole, a content of the dicarboxylic acid can range from 90 parts by mole to 98 parts by mole. Upon completion of step S20, polyester is obtained. A single polyester molecule in some embodiments is specifically presented as Formula (B):

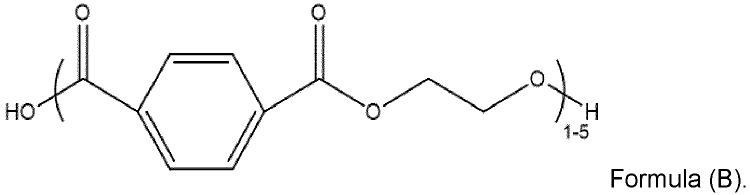

### [Step S30: Formation of Polymer (Temperature-sensitive and Humidity-regulating Polymer)]

In the present disclosure, a transesterification reaction is conducted between the temperature-sensitive and humidity-regulating unit precursor and the polyester to form the temperature-sensitive and humidity-regulating polymer. Specifically, after the transesterification reaction, the polyester forms the main chain of the polymer, while the temperature-sensitive and humidity-regulating unit precursor forms the side chain of the polymer, in which the main chain of the polyester has carbon chain segments, and the side chain is connected to carbon chain segments of the main chain of the polyester. In some embodiments, the transesterification reaction between the temperature-sensitive and humidity-regulating unit precursor and the polyester can be conducted in a solvent, in which the solvent can be a diol such as ethylene glycol or polyethylene glycol. Specifically, when in step S20 the dicarboxylic acid and the diol are directly placed into the mixture containing the temperature-sensitive and humidity-regulating unit precursor obtained from step S10 to conduct the second polymerization reaction, a catalytic amount of antimony triacetate (Sb(CH₃COO)₃) can be directly added after the completion of the second polymerization reaction to facilitate the transesterification reaction between the temperature-sensitive and humidity-regulating unit precursor and the polyester. In some embodiments, the transesterification reaction can occur at a temperature of 270°C to 290°C and a pressure of 1 atm to 2 atm for 2 hours to 3 hours.

It is noteworthy that since the first polymerization reaction, second polymerization reaction, and transesterification reaction in the present disclosure do not require steps for solvent removal and purification, they can be directly conducted in the same reaction vessel. Consequently, the temperature-sensitive and humidity-regulating unit precursor and the polyester can fully participate in the transesterification reaction, significantly enhancing manufacturing convenience and productivity. Upon completion of step S30, a polymer with a temperature-sensitive and humidity-regulating function is obtained. A single polymer molecule in some embodiments is specifically presented as Formula (C):

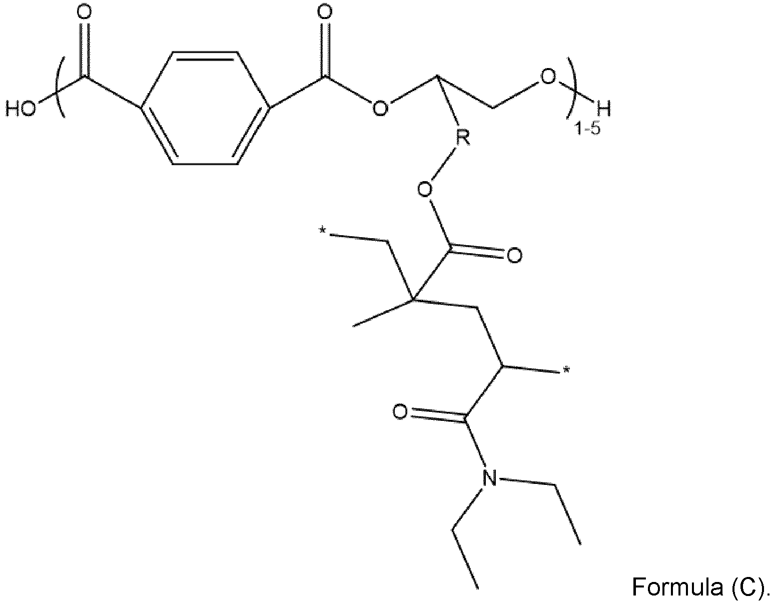

### [Step S40: Formation of Temperature-sensitive and Humidity-regulating Fiber]

In the present disclosure, the polymer is fiberized to form the temperature-sensitive and humidity-regulating fiber. In some embodiments, the temperature-sensitive and humidity-regulating polymer can be uniformly mixed with conventional polyester (polyethylene terephthalate) followed by powder refining, powder dispersion, and granulation steps to form fiber masterbatch. In some embodiments, a content of temperature-sensitive and humidity-regulating polymer in the fiber masterbatch can range from 0.5 wt.% to 5 wt.%. In some embodiments, the powder refining step may involve pulverization using a grinder at room temperature, and the powder dispersion step may be carried out at a rotation speed of 450 to 550 rpm for 4 to 6 minutes. In some embodiments, after the powder refining step, a particle size of the polymer can range from 1 µm to 500 µm to facilitate the granulation step. In some embodiments, the temperature of the granulation step can range from 220°C to 270°C, and the screw speed can range from 150 rpm to 250 rpm. Upon completion of step S40, the temperature-sensitive and humidity-regulating fiber of the present disclosure are obtained, in which the temperature-sensitive and humidity-regulating fiber comprises the polymer, the polymer includes a polyester main chain and at least one side chain, and the side chain is connected to the carbon chain segment of the polyester main chain. The side chain has the structure represented by Formula (1): 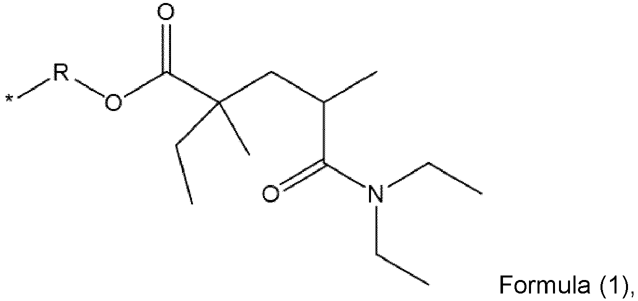 in which R can be, for example, an alkylene group such as ethylene group, propylene group, butylene group, pentylene group, hexylene group, or heptylene group. In some embodiments, the fiber specification of the temperature-sensitive and humidity-regulating fiber can range from 75d/72f to 75d/36f. In some embodiments, after obtaining the temperature-sensitive and humidity-regulating fibers, they can be further woven into a fabric. Since the temperature-sensitive and humidity-regulating fiber can be quickly dried at high temperature to achieve a cooling function, and can slow down the drying rate of moisture at low temperature to achieve a function of reducing heat loss, fabrics made from the temperature-sensitive and humidity-regulating fiber can provide users with stable thermal comfort.

In the following descriptions, various comparative examples and embodiments will be listed for testing and evaluation to verify the efficacy of the present disclosure. It should be understood that the present disclosure should not be limited by the embodiments described below.

### [Experiment 1: Water Contact Angle Test for Temperature-sensitive and Humidity-regulating Fibers]

In this experiment, the temperature-sensitive and humidity-regulating unit precursor are grafted onto polyethylene terephthalate (PET) to form the temperature-sensitive and humidity-regulating polymer through transesterification reaction, and the temperature-sensitive and humidity-regulating polymer is fiberized to form the temperature-sensitive and humidity-regulating fiber, and then a water contact angle test is conducted on the temperature-sensitive and humidity-regulating fiber. Specifically, the preparation method of the temperature-sensitive and humidity-regulating polymer involves a polymerization reaction of 10 parts by mole of hydroxyethyl methacrylate and 100 parts by mole of N,N-dimethylacrylamide in ethylene glycol (in which the ethylene glycol has an weight average molecular weight of 62 g/mol) using the method described in paragraph [0028] of the present disclosure, resulting in obtaining a mixture containing the temperature-sensitive and humidity-regulating unit precursor in a reaction vessel. Subsequently, 100 parts by mole ethylene glycol and 100 parts by mole of terephthalic acid are placed in the reaction vessel, and a polymerization reaction of ethylene glycol and terephthalic acid is conducted at a temperature of 280°C and a pressure of 1 atm for 1 hour. After the polymerization reaction, a catalytic amount of antimony acetate is added to the reaction vessel, and a transesterification reaction is conducted at a temperature of 290°C and a pressure of 1 atm for 2 hours. Upon completion of the transesterification reaction, the obtained temperature-sensitive and humidity-regulating polymer is fiberized to form the temperature-sensitive and humidity-regulating fiber, in which the fiberization process includes powder refining, powder dispersion, granulation, and spinning steps as described in paragraph [0039] of the present disclosure. In this experiment, the powder dispersion step involves dispersion at 450 rpm for 6 minutes, and the granulation temperature of the granulation step is 220°C with a screw speed of 150 rpm. The fiber specification of the temperature-sensitive and humidity-regulating fiber is 75d/72f. In Embodiment 1, 2, and 3, a content of the temperature-sensitive and humidity-regulating polymer in the fiber masterbatch is 0.5 wt.%, 3 wt.%, and 5 wt.%, respectively.

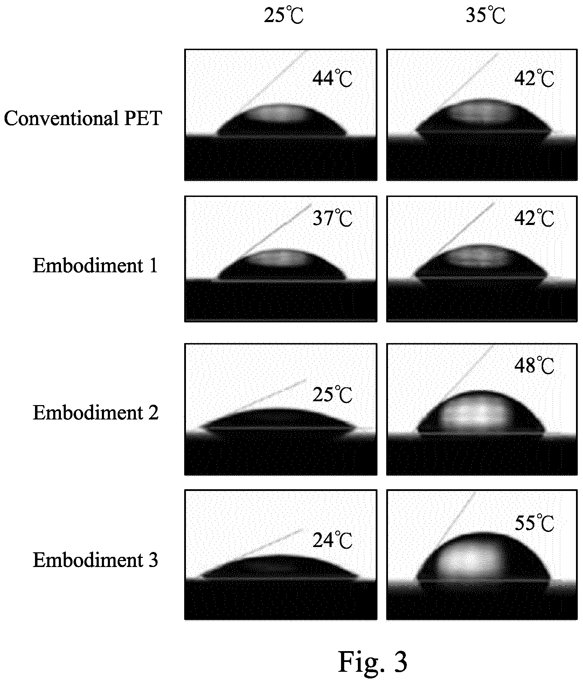

The test results are shown in Fig. 3, in which Fig. 3 includes images showing the temperature-sensitive and humidity-regulating fibers of Embodiments 1-3 and the conventional polyester (PET) fiber and their contact with water droplets.

It can be observed from the test results that at relatively low temperature (25°C), the contact angle between the surface of the temperature-sensitive and humidity-regulating fiber of Embodiments 1-3 and water droplets is smaller compared to the contact angle between the surface of the conventional PET fiber and water droplets, and that at relatively high temperature (35°C), the contact angle between the surface of the temperature-sensitive and humidity-regulating fiber of Embodiments 1-3 and water droplets is larger compared to the contact angle between the surface of the conventional PET fiber and water droplets. This indicates that the temperature-sensitive and humidity-regulating fiber of the present disclosure is more hydrophobic at high temperatures, thereby being dried quickly to achieve a cooling effect, and is more hydrophilic at low temperatures, thereby slowing down the drying rate of moisture to reduce heat loss and maintaining body temperature. Moreover, as the proportion of temperature-sensitive and humidity-regulating polymer in the fiber increases, this phenomenon becomes more pronounced.

### [Experiment 2: Thermogravimetric Analysis (TGA) Test for Temperature-sensitive and Humidity-regulating Polymer]

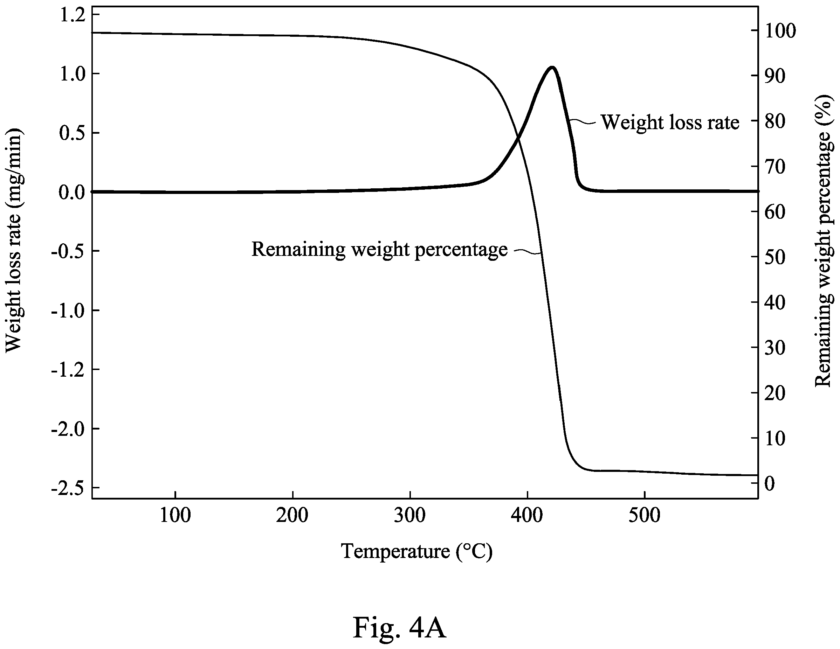

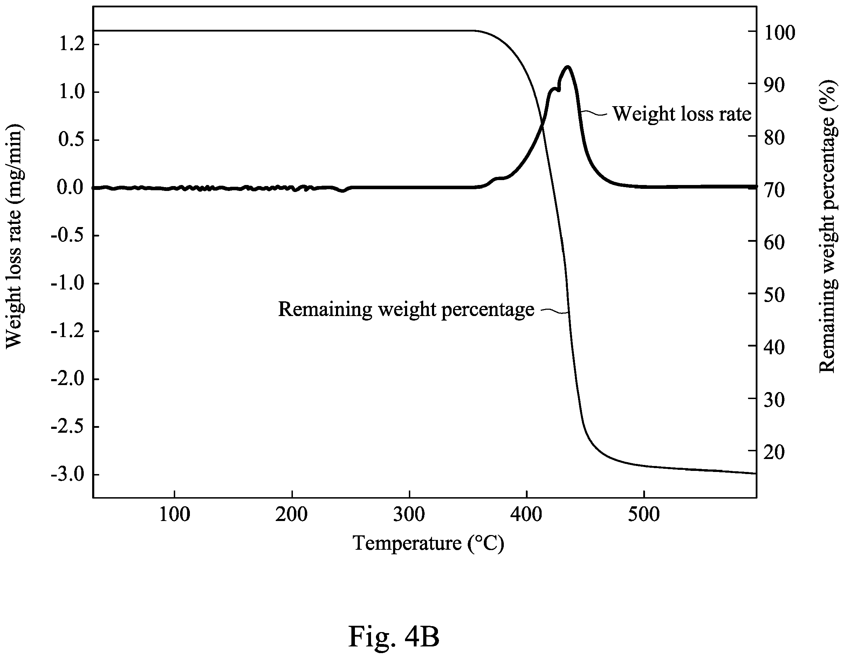

In this experiment, thermogravimetric analysis (TGA) is conducted on the aforementioned temperature-sensitive and humidity-regulating polymer A4 and the temperature-sensitive and humidity-regulating fiber of Embodiment 3. The results are shown in Fig. 4A and 4B, in which Fig. 4A is a thermogravimetric analysis diagram of the temperature-sensitive and humidity-regulating polymer A4, and Fig. 4B is a thermogravimetric analysis diagram of the temperature-sensitive and humidity-regulating fiber of Embodiment 3 (testing conditions: temperature range from 20°C to 600°C with a heating rate of 10°C/min). The results show that temperature-sensitive and humidity-regulating polymer A4 and temperature-sensitive and humidity-regulating fiber of Embodiment 3 have thermal decomposition temperatures of approximately 325°C and 395°C, respectively (defined as the temperature at which the sample loses 5% of its weight). This indicates that the temperature-sensitive and humidity-regulating polymer of the present disclosure can stably exist in environments at the above granulation temperature without deteriorating, and the temperature-sensitive and humidity-regulating fiber also exhibits high thermal stability.

According to the aforementioned embodiments of the present disclosure, the temperature-sensitive and humidity-regulating fiber includes the polymer, and through the configuration of the side chain in the polymer, the temperature-sensitive and humidity-regulating fiber can be quickly dried at high temperature to achieve a cooling function, and can slow down the drying rate of moisture at low temperature to achieve a function of reducing heat loss and maintain body temperature. On the other hand, in the manufacturing process of the temperature-sensitive and humidity-regulating fiber, since there is no need for purification and cleaning between each step, the product of each step can be fully used in the reaction of subsequent steps, thereby greatly improving the convenience of the manufacturing process and increasing the yield.

## Claims

1. A temperature-sensitive and humidity-regulating fiber, **characterized by** comprising:
a polymer, comprising:
a polyester main chain; and
at least one side chain connected to the polyester main chain, wherein the side chain is a structure shown in Formula (1): 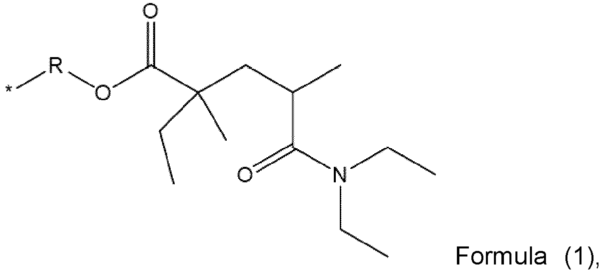 wherein R is an alkylene group.

2. The temperature-sensitive and humidity-regulating fiber of claim 1, **characterized in that** in Formula (1), R is a functional group selected from the group consisting of ethylene group, propylene group, butylene group, pentylene group, hexylene group, and heptylene group.

3. The temperature-sensitive and humidity-regulating fiber of any one of claims 1 to 2, **characterized in that** the polyester main chain has a carbon chain segment, and the side chain is connected to the carbon chain segment of the polyester main chain.

4. A manufacturing method of a temperature-sensitive and humidity-regulating fiber, **characterized by** comprising:
conducting a first polymerization reaction between N,N-diethylacrylamide and hydroxyalkyl methacrylate to form a first compound;
conducting a second polymerization reaction between a dicarboxylic acid and a diol to form a second compound;
conducting a transesterification reaction between the first compound and the second compound to form a polymer; and
fiberizing the polymer to form the temperature-sensitive and humidity-regulating fiber.

5. The manufacturing method of a temperature-sensitive and humidity-regulating fiber of claim 4, **characterized in that** a content of the N,N-diethylacrylamide ranges from 90 parts by mole to 110 parts by mole, and a content of the hydroxyalkyl methacrylate ranges from 2 parts by mole to 10 parts by mole.

6. The manufacturing method of a temperature-sensitive and humidity-regulating fiber of any one of claims 4 to 5, **characterized in that** the first polymerization reaction between the N,N-diethylacrylamide and the hydroxyalkyl methacrylate is conducted in a solvent, and the solvent is the diol.

7. The manufacturing method of a temperature-sensitive and humidity-regulating fiber of claim 6, **characterized in that** the second polymerization reaction is conducted with the solvent, the dicarboxylic acid, and the diol.

8. The manufacturing method of a temperature-sensitive and humidity-regulating fiber of any one of claims 4 to 7, **characterized in that** the transesterification reaction between the first compound and the second compound is conducted in a solvent, and the solvent is the diol.

9. The manufacturing method of a temperature-sensitive and humidity-regulating fiber of any one of claims 4 to 8, **characterized in that** the diol comprises ethylene glycol, polyethylene glycol, or a combination thereof, and a weight average molecular weight of the diol ranges from 62 g/mol to 200 g/mol.

10. The manufacturing method of a temperature-sensitive and humidity-regulating fiber of any one of claims 4 to 9, **characterized in that** the first compound has a lower critical solution temperature of 25°C to 32°C when a light transmittance ranges from 3% to 80%.
